Europäisches Patentamt

European Patent Office

Office européen des brevets

(11) Publication number: **0 287 970 B1**

## EUROPEAN PATENT SPECIFICATION

(45) Date of publication of patent specification: **19.01.94**  (51) Int. Cl.5: **C08J 3/28**, C08F 6/10

(21) Application number: **88106050.3**

(22) Date of filing: **15.04.88**

(54) **Process for producing highly water absorptive polymer.**

(30) Priority: **17.04.87 JP 94466/87**

(43) Date of publication of application:
**26.10.88 Bulletin  88/43**

(45) Publication of the grant of the patent:
**19.01.94 Bulletin  94/03**

(84) Designated Contracting States:
**DE FR GB IT NL SE**

(56) References cited:
**EP-A- 0 040 087
EP-A- 0 158 523**

**PATENT ABSTRACTS OF JAPAN, vol. 6, no.
219 (C-132)[1097], 2nd November 1982; & JP-
A-57 121 009 (SUMITOMO KAGAKU KOGYO
K.K.) 28-07-1982**

(73) Proprietor: **MITSUBISHI PETROCHEMICAL CO.,
LTD.
5-2, 2-chome, Marunouchi
Chiyoda-ku Tokyo 100(JP)**

(72) Inventor: **Itoh, Kiichi Mitsubishi Petrochemi-
cal
Company
Limited Gijutsu Kaihatsu Kenkyusho, 1
Toho-Cho Yokkaichi-shi Mie-Ken(JP)**
Inventor: **Shibano, Takeshi Mitsubishi Petro-
chemical
Company
Limited Gijutsu Kaihatsu Kenkyusho, 1
Toho-Cho Yokkaichi-shi Mie-Ken(JP)**

(74) Representative: **Hansen, Bernd, Dr.rer.nat. et
al
Hoffmann, Eitle & Partner
Patentanwälte
Postfach 81 04 20
D-81904 München (DE)**

**Description**

BACKGROUND OF THE INVENTION

Field of the Art

This invention relates to a process for producing a highly water absorptive polymer having excellent water absorbing properties and an extremely low content of unpolymerized monomers.

The polymer obtained according to the production process of the present invention can be swelled by absorption of a large amount of water within a short time, is insoluble in water, has a great strength of the swelled gel, and further is very safe in use due to its extremely low content of unpolymerized monomers. Therefore, it can be used advantageously for production of various absorbing materials and various materials which are to be used under swelled state with water being absorbed.

Prior Art

Materials such as paper, pulp, nonwoven fabric, spongy urethane resins and the like have hitherto been used as water retentive materials for a variety of sanitary goods such as a sanitary napkin, and paper diaper and a variety of agricultural materials. However, these materials have a water absorption capacity of no more than 10-50 times their own weight, which causes problems that an extensively increased bulk of the material is required for absorbing or retaining a large amount of water and that water is easily released from the material in which water has been absorbed on pressing it.

There have recently been proposed a variety of highly water absorptive polymer materials and production methods thereof in order to settle the aforementioned problems of the water absorptive materials of this kind. For instance, there have been proposed a graft polymer of starch (Japanese Patent Publication No. 46199/78,), a denatured cellulose (Unexamined Published Japanese Patent Application No. 80376/75,), a crosslinked water soluble polymer (Japanese Patent Publication No. 23462/68,), and a self-crosslinking polymer of an alkali metal salt of acrylic acid (Japanese Patent Publication No. 30710/79,). As far as the present inventors know, however, these highly water absorptive polymer materials are insufficient either in low water absorbing capacity or in that there still remains a considerable amount of unreacted monomers such as 0.5% by weight, or even 1 to 2% by weight as the case may be. Therefore, these conventional highly water absorptive polymer materials have not been satisfactorily used for articles which require high level of safety in use such as a sanitary napkin and paper diaper.

JP-A-57 121 009 discloses a process for preparing a water-soluble high-molecular weight polymer. The process comprises polymerizing an aqueous solution of a (meth)acrylic acid base (salt) by conventional polymerization methods, and then subjecting the product formed to ultraviolet photo-polymerization in the presence of a photo-polymerization sensitizer.

SUMMARY OF THE INVENTION

The present invention provides a process for reducing the content of unpolymerized monomers in a highly water absorptive water-insoluble polymer to produce a product excellent in water absorbing properties and having an extremely low content of unpolymerized monomers with ease at low cost.

The present inventors have conducted an intensive research in order to solve the aforementioned problems, and eventually found that such an object is adequately attained by conducting irradiation with ultraviolet rays on a highly water absorptive polymer.

Thus, the present invention provides a process for reducing the content of unpolymerized monomers in a highly water absorptive cross-linked water-insoluble polymer, the polymer being a homopolymer of an ethylenically unsaturated carboxylic acid or a copolymer of such an acid with a monomer copolymerizable therewith, the polymer having carboxylic groups and/or carboxylate groups and a water content of 0.01 to 40 parts by weight per one part by weight of the polymer:

the process comprising irradiating the cross-linked polymer with ultraviolet rays in the absence of a photopolymerisation senitizer.

According to the process of the present invention, a highly water absorptive polymer which has a high water absorbing capacity as well as an extremely low content of unpolymerized monomers is produced very easily at low cost. The highly water absorptive polymer is, by making use of its excellent properties, advantageously used for production of various articles including sanitary goods such as a sanitary napkin and paper diaper, and articles for horticulture or agriculture such as a soil improver and water retention agent.

## DETAILED DESCRIPTION OF THE INVENTION

Starting highly water-absorptive polymer

The starting highly water absorptive polymer to be used in the present invention is a homopolymer or mutual copolymer of ethylenically unsaturated carboxylic acids, preferably acrylic acid or methacrylic acid, or a copolymer or a major amount, preferably 80 mol% or more of the above monomers with a monomer copolymerizable therewith, which will provide a water insoluble polymer (including di-polyethylenic monomer acting as a crosslinking agent) or with an appropriate substrate, preferably a hydrophilic one (a graft polymer is obtained in the latter case). Thus, as the starting highly water absorptive polymer to be used in the process of the present invention may be used any water-insoluble polymer which is a water absorptive polymer containing carboxyl groups and/or carboxylate groups.

The highly water absorptive polymers may include, crosslinked products of polymers such as acrylic acid (salt) polymer, methacrylic acid (salt) polymer, acrylic acid (salt)/methacrylic acid (salt) copolymer, starch/acrylic acid (salt) graft copolymer, saponified product of starch/acrylic acid (salt) graft copolymer, saponified product of starch/acrylate graft copolymer, saponified product of starch/methyl methacrylate graft copolymer, saponified product of methylmethacrylate/vinyl acetate copolymer, saponified product of methyl acrylate/vinyl acetate copolymer, saponified product of starch/acrylonitrile graft copolymer, saponified product of starch/acrylamide graft copolymer, saponified product of starch/acrylonitrile-2-acrylamide-2-methylpropanesulfonic acid graft copolymer, and saponified product of starch/acrylonitrile/vinylsulfonic acid graft copolymer, and polyethyleneoxide crosslinked with acrylic acid and a crosslinked product of sodium carboxymethylcellulose. The above-mentioned polymers (including copolymers) of acrylic acid (salt) or methacrylic acid (salt) may be also such copolymers of acrylic acid (salt) or methacrylic acid (salt) as copolymerized with comonomers in an amount which will not lower the capacity of the resulting water absorptive polymer such as maleic acid (salt), itaconic acid (salt), acrylamide, methacrylamide, 2-acrylamide-2-methylpropanesulfonic acid, 2-acryloylethanesulfonic acid, 2-methacryloylethanesulfonic acid, 2-hydroxyethyl acrylate, 2-hydroxyethyl methacrylate, and 2-vinylpyridine, 4-vinylpyridine.

The crosslinked products of various polymers as mentioned above to be used as the starting highly water absorptive polymer in the present invention can be produced by various ways of crosslinking. There may be mentioned, for example, self-crosslinking through occurrence with high degree of polymerization of polymeric molecules of entanglement between molecular chains or pseudo-crosslinking, crosslinking with a divinyl compound copolymerizable with the above various monomers, such as $N,N'$-methylenebis(meth)-acrylamide, and (poly)ethylene glycol di(meth)acrylate, the method of effecting crosslinking by addition of polyfunctional compounds reactive with functional groups of the polymer, for example, carboxylate group, such as (poly)glycidyl ethers, haloepoxy compounds, polyaldehydes, polyols and polyamines thereby causing reaction, and a crosslinking based on a reaction between the functional groups existing in the polymer, for example, esterification between carboxyl group and hydroxyl group.

As the starting highly water absorptive polymer of the carboxylate type, namely the salt type, there may be mentioned those of the alkali metal salt type such as sodium and potassium, the alkaline earth metal salt type such as magnesium and calcium, the ammonium salt type, and the amine salt type. Particularly preferred is the polymer of the alkali metal salt type.

The starting highly water absorptive polymer of the present invention may be one which has been subjected to a post-treatment such as surface crosslinking with polyglycidyl ether or a polyvalent metal salt.

Ultraviolet-rays irradiation

According to the present invention, the above-mentioned highly water absorptive polymer is irradiated with ultraviolet rays. Ultraviolet-rays irradiation may be practiced by use of a conventional UV lamp. The conditions under which the irradiation is conducted such as irradiation intensity and time may differ depending on the kind, the water content and the particle size distribution of the highly water absorptive polymer used, however, the irradiation is generally conducted using a UV lamp at an intensity of 10 to 20 W/cm, preferably 30 to 120 W/cm for 0.1 sec. to 30 min. with the distance between a UV lamp and the highly water absorptive polymer being 2 to 30 cm.

The water content in the highly water absorptive polymer during irradiation is 0.01 to 40 parts by weight, preferably 0.05 to 10 parts by weight per 1 part by weight of the polymer. Water content less than 0.01 part by weight or in excess of 40 parts by weight is not desirable, because the effect of decreasing

EP 0 287 970 B1

unpolymerized monomers is remarkably inferior.

The ultraviolet-rays irradiation according to the present invention may be conducted under vacuum or in the presence of an inorganic inert gas such as nitrogen, argon, helium, etc. or in air. The irradiation temperature is not particularly limited, and the irradiation is sufficiently conducted at room temperature.

Further, the irradiation can be practiced in various manners. Specific examples include a manner in which the water content of the highly water absorptive polymer is adjusted to the range specified above and irradiated with ultraviolet rays at room temperature and a manner in which ultraviolet rays are irradiated directly onto the reaction product mixture containing the highly water absorptive polymer and water obtained in the production process of the highly water absorptive polymer.

## EXPERIMENTAL EXAMPLES

### Reference Example 1

A highly water absorptive polymer was prepared according to the method set forth in Example 1 of Japanese Patent Publication No. 30710/1979, as follows.

Into a 500-ml four-necked round flask equipped with a stirrer, a reflux condenser, a dropping funnel and a nitrogen-introducing pipe was charged 228 ml of n-hexane, and 1.8 g of sorbitane monostearate was added and dissolved therein. Then, dissolved oxygen was expelled by blowing nitrogen gas into the solution.

Separately, to 30 g of acrylic acid in a conical flask was added, while externally ice-cooling, an aqueous solution of 13.1 g of caustic soda with a purity of 95% dissolved in 39 g of water to neutralize 75% of the carboxyl groups. The monomer concentration in the aqueous phase became 45% by weight. Subsequently, 0.1 g of potassium persulfate was added and dissolved therein, and thereafter nitrogen gas was blown into the solution to expel dissolved oxygen.

The contents in the conical flask were added into the above four-necked flask to disperse therein, and reaction was carried out for 6 hours while introducing nitrogen gas gradually and maintaining the inner temperature in the flask at 60 to 65 °C in an oil bath. The reaction system became a suspension system in which swelled polymer particles were easy to sediment when stirring was stopped. After evaporating n-hexane under reduced pressure, the remaining swelled polymer was dried under reduced pressure at a temperature of 80 to 90 °C. The polymer formed was obtained as powder containing masses which are free-flowing and can be readily powdered.

### Reference Example 2

A highly water absorptive polymer was prepared according to the method set forth in Example 1 of Japanese Patent Publication No. 131608/1981, as follows.

30 g of acrylic acid was placed into a flask of 100ml volume, and with stirring and cooling, 58.7 g of a 22.6% aqueous solution of caustic soda was added dropwise to neutralize 80% of the acrylic acid. Subsequently, 0.1 g of potassium persulfate was added to this mixture, followed by stirring at room temperature to dissolve the same.

Separately, a 500-ml flask equipped with a reflux condenser, which had been internally replaced with nitrogen, was charged with 163.4 g of cyclohexane and 1.9 g of sorbitane monolaurate with HLB of 8.69 and the mixture was stirred at room temperature to dissolve the surfactant, followed by dropwise addition of the above-prepared partially neutralized solution of acrylic acid with potassium persulfate dissolved therein to make a suspension. The system was again internally replaced sufficiently with nitrogen gas, and then the temperature in the system was elevated and the reaction was carried out for 3 hours while maintaining the temperature at 55 to 60 °C in an oil bath. By evaporating to dryness the polymer solution formed under reduced pressure, a dry polymer was obtained in the form of fine particles.

### Reference Example 3

A highly water absorptive polymer was prepared according to the method set forth in Example 9 of Japanese Laid-Open Patent Publication No. 25886/1977, as follows.

15 g of corn starch and 115 g of water were charged into a reactor equipped with a stirrer, a nitrogen-blowing pipe and a thermometer, and the mixture was stirred under nitrogen stream at 80 °C for 1 hour. The starch solution obtained was cooled to 30 °C, and then 15 g of acrylic acid, 15 g of acrylamide, 0.15 g of calcium oxide, 0.15 g of ammonium persulfate as a polymerization catalyst and 0.015 g of sodium bisulfite

4

were added. Polymerization was carried out with stirring at 40°C for 3 hours, whereby the reaction mixture became an elastic white solid.

The white solid obtained was dried under reduced pressure at 80 to 90°C, and pulverized into powder. To the powder was added 146.5 g of a mixture of 5% aqueous sodium hydroxide/methanol (weight ratio of water to methanol = 1:5), and the mixture was left standing at room temperature for 1 hour, and then dried under reduced pressure at 80 to 90°C and pulverized to give a powdery polymer tinted slightly with brown.

Reference Example 4

A highly water absorptive polymer was prepared according to the method set forth in Example 3 of Japanese Laid-Open Patent Publication No. 27455/1977, as follows.

To 60 g of vinyl acetate and 40 g of methyl acrylate was added 0.5 g of benzoyl peroxide as a polymerization initiator, and this mixture was dispersed in 300 ml of water containing 3 g of a partially saponified polyvinyl alcohol as a stabilizer. Polymerization reaction was carried out at 65°C for 6 hours, and the polymer formed was filtered and dried.

Subsequently, 25 g of the polymer was dissolved in 800 ml of methanol under heating, and 58.1 ml of 40% aqueous solution of caustic soda was added to carry out saponification reaction at 60°C for 5 hours. The saponified product after completion of the reaction was washed with methanol and dried under reduced pressure to obtain a powdery polymer.

Reference Example 5

A highly water absorptive polymer was prepared according to the method set forth in Example 11 of Japanese Laid-Open Patent Publication No. 71907/1983, as follows.

30 g of acrylic acid was added to 9.24 g of deionized water, and to the mixture were added 20.6 g of potassium hydroxide with a purity of 85% as a neutralizing agent and 0.00832 g of N,N′-methylenebisacrylamide successively to prepare an aqueous solution of potassium acrylate (neutralization degree: 75%) with a monomer mixture concentration of 70% by weight.

While maintaining the temperature of this aqueous solution at 70°C, a solution of 0.208 g of 2,2'-azobis-(2-amidinopropane) dihydrochloride dissolved in 1.0 g of water was added thereto, and the mixture was immediately cast and spread on the bottom surface of a cylindrical reactor with a diameter of about 10 cm (the reactor had previously been maintained at 70°C). Several seconds after, polymerization was initiated, and the reaction was completed within about 1 minute to give a dry polymer expanded by the polymerization heat, which was pulverized into powdery polymer.

Example 1

The powdery polymer obtained in Ref. Example 1 was subjected to screening through a sieve to select particles having a size between 0.105-0.50mm (32 to 145 mesh), and their water content was adjusted to 20% by weight based on dried polymer.

Next, the polymer was irradiated with ultraviolet rays for about 5 seconds using a UV lamp of 80 W/cm with a distance between the lamp and the polymer being 8 cm, and then dried under reduced pressure.

Examples 2 - 5

The procedure of Example 1 was repeated except for using as a starting polymer each of the polymers obtained in Ref. Examples 2 - 5 to obtain a dry polymer.

Example 6

The procedure of Example 1 was repeated except for using the polymer obtained in Ref. Example 3 and changing the irradiation time to 3 seconds to obtain a dry polymer.

Example 7

The procedure of Example 1 was repeated except for using the polymer obtained in Ref. Example 5 and changing the water content to 50% by weight to obtain a dry polymer.

5

Example 8

Polymerization reaction mixture was obtained in the same way as in Ref. Example 1. From this mixture was removed 30 g of water by azeotropic distillation of water and n-hexane, and further n-hexane was removed. Except for using the wet polymer thus obtained as a starting material, the same treatment as in Example 1 was conducted to give a dry polymer.

Example 9

The procedure of Example 1 was repeated except for using as a starting polymer a commercially available highly water absorptive polymer ("Sunwet IM-1000") to obtain a dry polymer. "Sunwet IM-1000" has carboxyl groups or carboxylate derived from (meth)acrylic acid (according to manufacturer's brochure).

For the polymers obtained in Examples and Reference Examples the following tests were conducted to evaluate pure water absorbing capacity, saline solution absorbing capacity and unpolymerized monomer concentration. The results are shown in Table 1.

A. Pure water absorbing capacity

About 0.5 g of the polymer and about one liter of pure water were respectively weighed and charged in a one-liter beaker, followed by stirring to disperse the polymer in pure water. Thereafter, the beaker was left standing for about 60 minutes to have the polymer sufficiently swelled with pure water. Next, the beaker content was drained through a sieve having openings of 0.15mm (100 mesh-sieve), and the amount of the filtrate was weighed and pure water absorption capacity was calculated according to the following equation:

$$\text{Pure water absorption capacity (g/g resin)} = \frac{\text{Charged amount of pure water (g)} - \text{Amount of filtrate (g)}}{\text{Charged amount of polymer (g)}}$$

B. Saline solution absorbing capacity

About 0.5 g of the polymer and about 200 g of a saline solution having a concentration of 0.9 % by weight were respectively weighed and charged in a 300-ml beaker, followed by stirring to disperse the polymer in the saline solution. Thereafter, the beaker was left standing for about 60 minutes to have the polymer sufficiently swelled with the saline solution. Next, the beaker content was drained through a sieve having openings of 0.15 mm (100 mesh-sieve), and the amount of the filtrate was weighed and pure water absorption capacity was calculated according to the following equation:

$$\text{Saline solution absorption capacity (g/g resin)} = \frac{\text{Charged amount of saline solution (g)} - \text{Amount of filtrate (g)}}{\text{Charged amount of polymer (g)}}$$

C. Unpolymerized monomer concentration

0.5 g of the polymer was precisely weighed and charged in a two-liter beaker, and one liter of ion exchanged water was added thereto, followed by stirring for about 10 hours to sufficiently swell the polymer. The swelled polymer gel was filtered through a sieve having openings of 0.075 mm (200-mesh sieve) and the filtrate was analyzed by a high pressure liquid chromatography.

Separately, standard monomer solutions having determined concentration were prepared to make a calibration curve, and the absolute monomer concentration of the filtrate was determined in consideration of the degree of dilution (1/2000).

## Table 1

| Example No. | Pure water absorbing capacity (g/g resin) | Saline solution absorbing capacity (g/g resin) | Unpolymerized monomer concentration (ppm by wt.) |
|---|---|---|---|
| Ref. Example 1 | 450.0 | 62.0 | 9550 |
| ″            2 | 983.4 | 92.6 | 5600 |
| ″            3 | 350.5 | 58.0 | 10800 |
| ″            4 | 523.5 | 50.9 | 6830 |
| ″            5 | 512.8 | 75.0 | 15800 |
| Example    1 | 492.1 | 64.3 | 450 |
| ″            2 | 990.9 | 94.3 | 250 |
| ″            3 | 368.2 | 60.1 | 540 |
| ″            4 | 538.2 | 52.2 | 420 |
| ″            5 | 532.1 | 75.5 | 580 |
| ″            6 | 363.2 | 59.5 | 590 |
| ″            7 | 523.1 | 72.1 | 580 |
| ″            8 | 472.0 | 65.0 | 270 |
| ″            9 | 980.3 | 91.5 | 150 |
| Sunwet IM-1000 | 985.3 | 90.5 | 3650 |

## Claims

1. A process for reducing the content of unpolymerized monomers in a highly water absorptive cross-linked water-insoluble polymer, the polymer being a homopolymer of an ethylenically unsaturated carboxylic acid or a copolymer of such an acid with a monomer copolymerizable therewith, the polymer having carboxylic groups and/or carboxylate groups and a water content of 0.01 to 40 parts by weight per one part by weight of the polymer:

the process comprising irradiating the cross-linked polymer with ultraviolet rays in the absence of a photopolymerisation sensitizer.

2. The process according to claim 1, wherein the highly water absorptive polymer is a crosslinked product of a polymer selected from the group consisting of acrylic acid (salt) polymer, methacrylic acid (salt) polymer, acrylic acid (salt)/methacrylic acid (salt) copolymer, starch/acrylic acid (salt) graft copolymer, saponified product of starch/acrylic acid (salt) graft copolymer, saponified product of starch/acrylate graft copolymer, saponified product of starch/methyl methacrylate graft copolymer, saponified product of methyl methacrylate/vinyl acetate copolymer, saponified product of methyl acrylate/vinyl acetate copolymer, saponified product of starch/acrylonitrile graft copolymer, saponified product of starch/acrylamide graft copolymer, saponified product of starch/acrylonitrile-2-acrylamide-2-methylpropanesulfonic acid graft copolymer, saponified product of starch/acrylonitrile/vinylsulfonic acid graft copolymer; polyethyleneoxide crosslinked with acrylic acid; or a crosslinked product of sodium carboxymethylcellulose.

3. The process according to claim 2, wherein the polymer or copolymer of acrylic acid (salt) or methacrylic acid (salt) is a copolymer copolymerized with a comonomer selected from the group consisting of maleic acid (salt), itaconic acid (salt), acrylamide, methacrylamide, 2-acrylamide-2-methylpropanesulfonic acid, 2-acryloylethanesulfonic acid, 2-methacryloylethanesulfonic acid, 2-hydroxyethyl acrylate, 2-hydroxyethyl methacrylate, 2-vinylpyridine, 4-vinylpyridine.

4. The process according to any one of the preceding claims, wherein the highly water absorptive polymer has carboxylate groups of the type of alkali metal salt, alkaline earth metal salt, ammonium salt or amine salt.

5. The process according to claim 4, wherein the carboxylate groups are of the type of alkali metal salt.

6. The process according to any one of the preceding claims, wherein the highly water absorptive polymer is one which has been subjected to a post-treatment.

7. The process according to claim 6, wherein the post-treatment is a surface crosslinking with polyglycidyl ether or a polyvalent metal salt.

8. The process according to any one of the preceding claims, wherein the irradiation with ultraviolet rays is carried out using a UV lamp at an intensity of 10 to 200 W/cm.

9. The process according to claim 8, wherein the irradiation is conducted for 0.1 sec. to 30 min. with the distance between the UV lamp and the highly water absorptive polymer being 2 to 30 cm.

10. The process according to any one of the preceding claims, wherein the water content of the highly water absorptive polymer during the irradiation with ultraviolet rays is maintained at 0.05 to 10 parts by weight per 1 part by weight of said polymer.

**Patentansprüche**

1. Verfahren zur Reduzierung des Gehalts an nichtpolymerisierten Monomeren in einem hochwasserabsorptiven, vernetzten, wasserunlöslichen Polymer, wobei das Polymer ein Homopolymer einer ethylenisch ungesättigten Carbonsäure oder ein Copolymer einer solchen Säure mit einem hiermit copolymerisierbaren Monomer ist, das Polymer Carboxylgruppen und/oder Carboxylatgruppen trägt und einen Wassergehalt von 0,01 bis 40 Gew.-Teilen pro Gewichtsteil Polymer aufweist, wobei das Verfahren die Belichtung des vernetzten Polymers mit Ultraviolett-Lichtstrahlen in Abwesenheit eines Photopolymerisationssensibilisators umfaßt.

2. Verfahren nach Anspruch 1, wobei das hochwasserabsorptive Polymer ein Vernetzungsprodukt eines Polymers, ausgewählt aus der Reihe Polymer der Acrylsäure oder eines Salzes hiervon, Polymer von Methacrylsäure oder eines Salzes hiervon, Copolymer von Acrylsäure oder eines Salzes hiervon/Methacrylsäure oder eines Salzes hiervon, Pfropfcopolymer von Stärke/Acrylsäure oder eines Salzes hiervon, verseiftes Produkt eines Pfropfcopolymers von Stärke/Acrylsäure oder eines Salzes

8

**EP 0 287 970 B1**

hiervon, verseiftes Produkt eines Pfropfcopolymers von Stärke/Acrylat, verseiftes Produkt eines Pfropfcopolymers von Stärke/Methylmethacrylat, verseiftes Produkt eines Copolymers von Methylmethacrylat/Vinylacetat, verseiftes Produkt von einem Copolymer von Methylacrylat/Vinylacetat, verseiftes Produkt eines Pfropfcopolymers von Stärke/Acrylnitril, verseiftes Produkt eines Pfropfcopolymers von Stärke/Acrylamid, verseiftes Produkt eines Pfropfcopolymers von Stärke/Acrylnitril-2-acrylamid-2-methylpropansulfonsäure, verseiftes Produkt eines Pfropfcopolymers von Stärke/Acrylnitril/Vinylsulfonsäure; Polyethylenoxid, vernetzt mit Acrylsäure; oder ein vernetztes Produkt von Natriumcarboxymethylcellulose ist.

3. Verfahren nach Anspruch 2, wobei das Polymer oder Copolymer der Acrylsäure oder eines Salzes hiervon oder der Methacrylsäure oder eines Salzes hiervon ein Copolymer ist, das mit einem Comonomer, ausgewählt aus der Reihe Maleinsäure oder ein Salz hiervon, Itakonsäure oder ein Salz hiervon, Acrylamid, Methacrylamid, 2-Acrylamid-2-methylpropansulfonsäure, 2-Acryloylethansulfonsäure, 2-Methacryloylethansulfonsäure, 2-Hydroxyethylacrylat, 2-Hydroxyethylmethacrylat, 2-Vinylpyridin, 4-Vinylpyridin, copolymerisiert ist.

4. Verfahren nach einem der vorhergehenden Ansprüche, wobei das hochwasserabsorptive Polymer Carboxylatgruppen des Alkalimetallsalztyps, des Erdalkalimetallsalztyps, des Ammoniumsalztyps oder Aminsalztyps aufweist.

5. Verfahren nach Anspruch 4, wobei die Carboxylatgruppen vom Typ des Alkalimetallsalzes sind.

6. Verfahren nach einem der vorhergehenden Ansprüche, wobei das hochwasserabsorptive Polymer ein Polymer darstellt, das einer Nachbehandlung unterzogen worden ist.

7. Verfahren nach Anspruch 6, wobei die Nachbehandlung eine Oberflächenvernetzung mit Polyglycidylether oder einem mehrwertigen Metallsalz ist.

8. Verfahren nach einem der vorhergehenden Ansprüche, wobei die Belichtung mit Ultraviolett-Lichtstrahlen unter Verwendung einer UV-Lampe mit einer Leistung von 10 bis 200 W/cm durchgeführt wird.

9. Verfahren nach Anspruch 8, wobei die Belichtung während 0,1 Sek. bis 30 Min. und bei einem Abstand zwischen der UV-Lampe und dem hochwasserabsorptiven Polymer von 2 bis 30 cm durchgeführt wird.

10. Verfahren nach einem der vorhergehenden Ansprüche, wobei der Wassergehalt des hochwasserabsorptiven Polymers während der Belichtung mit Ultraviolett-Lichtstrahlen auf 0,05 bis 10 Gew.-Teilen pro 1 Gew.-Teil des Polymers gehalten wird.

**Revendications**

1. Procédé pour réduire la teneur en monomères non polymérisés d'un polymère insoluble dans l'eau, réticulé, à forte absorption d'eau, le polymère étant un homopolymère d'un acide carboxylique à insaturation éthylénique ou un copolymère d'un tel acide et d'un monomère copolymérisable avec ce dernier, le polymère comportant des groupes carboxyliques et/ou des groupes carboxylates et ayant une teneur en eau de 0,01 à 40 parties en poids par partie en poids du polymère,
   le procédé consistant à exposer le polymère réticulé à des rayons ultraviolets en l'absence d'un sensibilisateur de photopolymérisation.

2. Procédé selon la revendication 1, dans lequel le polymère à forte absorption d'eau est un produit réticulé d'un polymère choisi parmi l'ensemble comprenant les polymères de l'acide acrylique ou de ses sels, les polymères de l'acide méthacrylique ou de ses sels, les copolymères de l'acide acrylique ou de ses sels et de l'acide méthacrylique ou de ses sels, les copolymères greffés amidon/acide acrylique ou ses sels, le produit saponifié d'un copolymère greffé amidon/acide acrylique ou ses sels, le produit saponifié d'un copolymère greffé amidon/acrylate, le produit saponifié d'un copolymère greffé amidon/méthacrylate de méthyle, le produit saponifié d'un copolymère méthacrylate de méthyle/acétate de vinyle, le produit saponifié d'un copolymère acrylate de méthyle/acétate de vinyle, le produit saponifié d'un copolymère greffé amidon/acrylonitrile, le produit saponifié d'un copolymère greffé amidon/acrylamide, le produit saponifié d'un copolymère greffé amidon/acide acrylonitrile-2-acrylamide-2-méthylpropane sulfonique, le produit saponifié d'un copolymère greffé amidon/acrylonitrile/acide vinylsulfonique, un poly(oxyde d'éthylène) réticulé par de l'acide acrylique, ou encore un produit réticulé de la carboxyméthylcellulose de sodium.

3. Procédé selon la revendication 2, dans lequel le polymère ou le copolymère de l'acide acrylique ou de ses sels ou de l'acide méthacrylique ou de ses sels est un copolymère copolymérisé avec un comonomère choisi parmi l'ensemble comprenant l'acide maléique ou ses sels, l'acide itaconique ou ses sels, l'acrylamide, le méthacrylamide, l'acide 2-acrylamide-2-méthylpropanesulfonique, l'acide 2-acryloyléthanesulfonique, l'acide de 2-méthacryloyléthanesulfonique, l'acrylate de 2-hydroxyéthyle, le méthacrylate de 2-hydroxyéthyle, la 2-vinylpyridine, la 4-vinylpyrridine.

4. Procédé selon l'une quelconque des revendications précédentes, dans lequel le polymère à haute absorption d'eau possède des groupes carboxylates du type sel de métal alcalin, sel de métal alcalino-terreux, sel d'ammonium ou sel d'amine.

5. Procédé selon la revendication 4, dans lequel les groupes carboxylates sont du type sel de métal alcalin.

6. Procédé selon l'une quelconque des revendications précédentes, dans lequel le polymère à haute absorption d'eau est un polymère qui a été soumis à un post-traitement.

7. Procédé selon la revendication 6, dans lequel le post-traitement est une réticulation en surface avec du polyglycidyléther ou un sel d'un métal polyvalent.

8. Procédé selon l'une quelconque des revendications précédentes, dans lequel l'exposition aux rayons ultraviolets est réalisée à l'aide d'une lampe UV ayant une intensité de 10 à 200 W/cm.

9. Procédé selon la revendication 8, dans lequel l'exposition est effectuée pendant un laps de temps de 0,1 seconde à 30 minutes, la distance entre la lampe UV et le polymère à haute absorption d'eau étant de 2 à 30 cm.

10. Procédé selon l'une quelconque des revendications précédentes, dans lequel la teneur en eau du polymère à haute absorption d'eau pendant l'exposition aux rayons ultraviolets est maintenue à une valeur de 0,05 à 10 parties en poids par partie en poids du polymère.